# EUROPEAN PATENT APPLICATION

(11) **EP 4 748 492 A1**
(43) Date of publication of application: **27.05.2026**
(21) Application number: 24842385.7
(22) Date of filing: 17.07.2024
(51) Int. Cl.: B01J 20/06, B01D 53/02, B01D 53/52, C01B 3/50, C01B 3/00

(54) **MANGANESE-BASED ADSORPTION MATERIAL, AND PREPARATION METHOD THEREFOR AND USE THEREOF**

(30) Priority: 18.07.2023 CN 202310883714; 18.07.2023 CN 202310886689; 22.08.2023 CN 202311064573
(71) Applicant: China Petroleum & Chemical Corporation, Beijing 100728 (CN); Sinopec Research Institute of Petroleum Processing Co., Ltd., Beijing 100083 (CN)
(72) Inventor: SHI, Chunfeng, Beijing 100083 (CN); ZHENG, Jinyu, Beijing 100083 (CN); GUO, Wenchang, Beijing 100083 (CN)
(74) Representative: karo IP
(86) International application number: PCT/CN2024/105898
(87) International publication number: WO 2025/016396

(57) **Abstract**

This disclosure relates to a manganese-based adsorbent material, a preparation method, and the use thereof. The manganese-based adsorbent material of this invention exhibits excellent performance in hydrogen purification reactions, enabling the removal of normal amount of sulfides (volume content > 0.1%) from hydrogen at a temperature below 50°C. The purified hydrogen can then be directly used for fuel cell hydrogen supply. This manganese-based adsorbent material is a coproduct of graphite oxidation process. Simultaneously with preparation of the manganese-based adsorbent material, the content of manganese ions and other pollutants in wastewater is significantly reduced, solving the environmental pollution problems caused by wastewater discharge during graphite oxidation process.

## Description

### Technical Field

This disclosure pertains to the field of gas purification, and specifically relates to a manganese-based adsorbent material for gas purification, such as hydrogen purification, wherein the manganese-based adsorbent material is a coproduct of graphite oxidation. This disclosure also relates to a method for coproducing graphite oxide and the manganese-based adsorbent material, and the use of the manganese-based adsorbent material for purifying gases, such as hydrogen.

### Technical Background

Oxidized graphite, formally known as graphite oxide or graphitic acid, is a compound composed of carbon, hydrogen, and oxygen elements in varying molar ratios. Graphite oxide is an important type of graphite product, and can be used to prepare popular downstream products such as expanded graphite and graphene. Currently, the main method for producing graphite oxide is a redox method, which uses concentrated acid and a strong oxidizing agent such as potassium permanganate to oxidize graphite. However, the manganese-containing wastewater generated by existing graphite oxide methods is difficult to treat, posing a significant environmental challenge.

Hydrogen is an important new energy source. One of its uses is to supply hydrogen to fuel cells for power generation, thus realizing the utilization of hydrogen energy. However, the electrode catalysts of fuel cells are particularly sensitive to some trace impurities such as sulfides and formaldehyde, particularly sulfides. The presence of even trace amounts of sulfides can poison the fuel cell electrode catalyst, leading to a decrease in efficiency. Therefore, the sulfide content of hydrogen used in fuel cells is subject to strict requirements. It is required according to international standard that a sulfide content is less than 4 ppb (calculated as hydrogen sulfide), which is the most stringent requirement for content of impurities in hydrogen used in fuel cells. Ensuring that the sulfide content of hydrogen used in fuel cells meets the standards is a key technological challenge for hydrogen for fuel cells. Existing desulfurization technologies are mostly designed for gases such as natural gas, while methods for treating sulfides in hydrogen are scarce and suffer from problems such as poor desulfurization efficiency, complex processing, and high costs. Hydrogen sulfide and carbonyl sulfide are the main forms of sulfide impurities commonly found in gases, especially in hydrogen. Existing desulfurization technologies rarely address mixed sulfides or utilize manganese oxides for mixed sulfides desulfurization.

### Summary of the Invention

An objective of this invention is to provide a manganese-based adsorbent material, with which sulfides can be efficiently removed from gases, such as hydrogen, even in the case of mixed sulfides. Advantageously, the manganese-based adsorbent material is a coproduct of an oxidation process for preparing graphite oxide, and its preparation process simultaneously significantly reduces the content of manganese ions and the like in the preparation wastewater, thus solving the problem of environmental pollution caused by wastewater discharge.

To achieve the above objective, a first aspect of the present invention provides a manganese-based adsorbent material comprising Mn, C, O, optionally S, and optionally K elements;
wherein the manganese-based adsorbent material contains 25-63 wt. % of Mn, 0-15 wt. % of S, 14-37 wt. % of O, 0-20 wt. % of K, and 0.01-5 wt. % of C, based on the mass of the manganese-based adsorbent material,
wherein the manganese-based adsorbent contains Mn in the form of manganese oxides and C in the form of graphite oxide.

A second aspect of the present invention provides a method for coproducing graphite oxide and a manganese-based adsorbent material, wherein the method comprises:
S1. graphite, a Brønsted acid, and a permanganate, preferably potassium permanganate, are mixed to obtain a mixture, and then the resulting mixture is heated to carry out a reaction;
S2. water and/or hydrogen peroxide is added to the reaction material obtained in step S1 to continue the reaction, and the obtained reaction material is separated into a stock solution as separated and a solid phase through solid-liquid separation, and the solid phase is recovered to obtain graphite oxide;
S3. the stock solution as separated in step S2 is subjected to a hydrothermal reaction with or without addition of an auxiliary agent, and the resulting solid product is separated out to obtain the manganese-based adsorbent material,
wherein the conditions for the hydrothermal reaction in step S3 include: a temperature of 100 - 200°C, preferably 120 - 200°C, more preferably 150 - 180°C, and a period of 1 - 72h, preferably 12 - 36h.

A third aspect of the present invention provides the manganese-based adsorbent material prepared according to the second aspect of the present invention.

The fourth aspect of the present invention provides the use of the manganese-based adsorbent material according to the first aspect or obtained by the method according to the second aspect for removing impurities such as sulfides and formaldehyde from gases.

The fifth aspect of the present invention provides a method for purifying hydrogen, the method comprising: hydrogen is contacted with the manganese-based adsorbent material provided in the first aspect of the present invention to carry out a purification reaction.

The manganese-based adsorbent material of the present invention exhibits excellent performance in the hydrogen purification reaction process, and can remove sulfides from hydrogen at a temperature below 50°C. The purified hydrogen can meet the standard requirements for hydrogen used in fuel cells.

In the method of this invention, the preparation costs of manganese-based adsorbent material are reduced for the grounds below: a relatively high amount of potassium permanganate is used in the preparation of graphite oxide; no additional manganese source is required; and no sodium nitrate is added during the reaction process. This invention simultaneously produces the manganese-based adsorbent material while preparing graphite oxide, and exhibits excellent performance in treating the preparation wastewater during the preparation of manganese-based adsorbent material. It can significantly reduce the content of manganese ions and the like in the wastewater, solving the environmental pollution problems caused by wastewater discharge during the graphite oxide preparation process.

Other features and advantages of the present invention will be described in detail in the following section of Specific Embodiments.

### Description of Figures

The accompanying drawings are provided to further illustrate the invention and constitute a part of the specification. They are used together with the following specific embodiments to explain the invention, but do not constitute a limitation thereof. In the figures:
Figure 1 shows the XRD pattern of the manganese-based adsorbent material prepared in Example 1.1 of Experimental Series 1 of the present invention.
Figure 2 shows the XRD pattern of the manganese-based adsorbent material prepared in Example 2.1 of Experimental Series 2 of the present invention.
Figure 3 shows the XRD pattern of the manganese-based adsorbent material prepared in Example 3.1 of Experimental Series 3 of the present invention.

### Specific Embodiments

The specific embodiments of this disclosure will be described in details below in conjunction with the accompanying drawings. It should be understood that the specific embodiments described herein are only used for illustration and explanation and are not intended to limit this disclosure.

Exemplary embodiments are provided to make this disclosure thorough and to fully communicate its scope to those skilled in the art. Numerous specific details, such as examples of specific compositions, components, apparatuses, and methods, are set forth to provide a full understanding of embodiments of this disclosure. It will be apparent to those skilled in the art that the exemplary embodiments may be embodied in many different forms with no need of giving specific details, none of which should be considered as limiting the scope of this disclosure. In some exemplary embodiments, well-known methods, well-known apparatus structures, and well-known techniques are not described in detail.

The terminology used herein is for the purpose of describing particular exemplary embodiments only and is not intended to be limiting. Unless the context clearly indicates otherwise, the singular forms "a", "an", and "the" as used herein are intended to include the plural forms as well. The terms "comprising", "including", "containing", and "having" are inclusive and thus describe the presence of the stated feature, element, composition, step, integer, operation, and/or component, but do not exclude the presence or inclusion of one or more other features, integers, steps, operations, elements, components, and/or combinations thereof. Although the open-ended term "comprising" should be understood as a non-limiting term used to describe and claim the various embodiments described herein, in some respects it may instead be understood as a more restrictive and limiting term, such as "consisting of" or "essentially consisting of". Thus, for any given embodiment describing a composition, material, component, element, feature, integer, operation, and/or process step, this disclosure also particularly includes embodiments consisting of or essentially consisting of such composition, material, component, element, feature, integer, operation, and/or process step. In the case of "consisting of", the alternative embodiments exclude any additional compositions, materials, components, elements, features, integers, operations, and/or process steps. In the case of "essentially composed of", any additional compositions, materials, components, elements, features, integers, operations, and/or process steps that substantially affect the essential and novel characteristics are excluded from such embodiments. However, any compositions, materials, components, elements, features, integers, operations, and/or process steps that do not substantially affect the essential and novel characteristics may be included in the embodiments.

Any process steps, procedures, and operations described herein should not be construed as necessarily requiring them to be performed in the specific order discussed or shown, unless explicitly stated as in the specific order. It should also be understood that additional or alternative steps may be used unless otherwise stated.

Any specific numerical values disclosed herein (including the endpoints of numerical ranges) are not limited to their exact values, but should be understood to also include values close to the exact value, such as all possible values within ± 5% of the exact value. Furthermore, with respect to the disclosed numerical ranges, one or more new numerical ranges can be obtained by any combination between the endpoint values of the range, between the endpoint values and the specific point values of the range, as well as between the specific point values, and these new numerical ranges should also be regarded as specifically disclosed herein.

In addition, the disclosure of a range includes all values across the entire range and the disclosure of further subdivisions of the range, including the endpoints and subranges given for these ranges.

It should also be noted that the various specific technical features described in the above embodiments can be combined in any suitable manner, as long as they are not contradictory. To avoid unnecessary repetition, this application will not describe the various possible combinations separately.

In the context of this invention, the terms "stock solution as separated" and "filtration waste liquid" and "filtration stock solution" can be used interchangeably.

In the context of this invention, the term "manganese-based adsorbent material" refers to an adsorbent material whose main functional component is manganese or a manganese-containing compound. It does not necessarily mean that the weight percentage of manganese or manganese-containing compound(s) in the manganese-based adsorbent material exceeds 50%.

In the context of this invention, the term "manganese-based adsorbent material" is also abbreviated to "manganese oxide".

In the context of this invention, the term "specific surface area" refers to the BET specific surface area. The term "pore volume" refers to the pore volume determined by the BET method.

In the context of this invention, the term "hydrothermal reaction" refers to a synthesis reaction that occurs under pressure in hot water. Hydrothermal reactions typically form crystals of minerals dissolved in water. The terms "hydrothermal reaction" and "hydrothermal crystallization reaction" can be used interchangeably.

Unless otherwise specified, percentages herein refer to wt.%.

Unless otherwise stated, the terms used herein have the same meanings as commonly understood by those skilled in the art, and if a term is defined herein and its definition differs from the common understanding in the art, the definition herein shall prevail.

### First Aspect

The first aspect of the present invention provides a manganese-based adsorbent material comprising Mn, C, O, optionally S, and optionally K elements;
wherein the manganese-based adsorbent material contains 25-63 wt. % of Mn, 0-15 wt. % of S, 14-37 wt. % of O, 0-20 wt. % of K, and 0.01-5 wt. % of C, based on the mass of the manganese-based adsorbent material,
wherein the manganese-based adsorbent contains Mn in the form of manganese oxide and C in the form of graphite oxide.

According to a first embodiment of the first aspect of the present invention, the manganese-based adsorbent material contains 30-55 wt. % of Mn, 0.8-10 wt. % of S, 1-10 wt. % of K, and 0.01-5 wt. % of C elements, based on the mass of the manganese-based adsorbent material. In a preferred embodiment, the balance is mainly O element. Preferably, the manganese-based adsorbent material contains 35-50 wt. % of Mn, 1.2-6 wt. % of S, 3-8wt. % of K, and 0.02-1 wt. % of C elements, based on the mass of the manganese-based adsorbent material. In a preferred embodiment, the balance is mainly O element. In a preferred embodiment, the sum of the weight percentages of Mn, C, O, S, and K elements in the manganese-based adsorbent material is 100 wt. %. According to the first embodiment of the first aspect of the present invention, preferably, the XRD pattern of the manganese-based adsorbent material shows characteristic peaks at 20 positions of 28.6 + 0.5°, 37.4 ± 0.3°, 41.0 ± 0.3°, 42.8 ± 0.3°, 56.6 ± 0.3°, 59.4 ± 0.3°, 64.9 ± 0.3° and 72.4 ± 0.3°, respectively; and the half-width of the diffraction peak at 28.6 ± 0.5° is greater than 0.1°.

According to the first embodiment of the first aspect of the present invention, preferably, the specific surface area of the manganese-based adsorbent material is 10 - 100 m²/g, more preferably 30 - 60 m²/g, the pore volume is 0.05 - 0.5 ml/g, more preferably 0.1 - 0.3 ml/g, and the pore size is 12 - 36 nm, more preferably 15 - 30 nm.

According to the first embodiment of the first aspect of the invention, preferably, the manganese in the manganese-based adsorbent material is mainly present in the form of manganese oxide, particularly in the form of MnO₂, more preferably mainly present in the form of β -MnO₂. The manganese-based adsorbent material is advantageously used for removing sulfur-containing impurities, such as hydrogen sulfide and carbonyl sulfide, from gases, for example hydrogen.

According to the first embodiment of the first aspect of the present invention, the manganese-based adsorbent material has a relatively large specific surface area and pore volume, and a moderate pore size. It exhibits excellent sulfur compounds removal performance in the reacting process of removing sulfides from gases, achieving a removal rate of over 90% for sulfur compounds in a feed. At the same time, no sodium nitrate or hydrogen peroxide needs to be added during the reaction, reducing the cost of material preparation. The manganese oxide-based material co-produced can significantly reduce the content of manganese ions and other substances in wastewater.

Alternatively, according to a second embodiment of the first aspect of the present invention, the manganese-based adsorbent material contains 25-53 wt. % of Mn, 1-15 wt. % of S, 2-20 wt. % of K, and 0.01-2 wt. % of C elements, based on the mass of the manganese-based adsorbent material. In a preferred embodiment, the balance is O element. Preferably, the manganese-based adsorbent material contains 40-53 wt. % of Mn, 2-12 wt. % of S, and 6-15 wt. % of K elements. In a preferred embodiment, the balance is O. In a preferred embodiment, the sum of the weight percentages of Mn, C, O, S, and K elements in the manganese-based adsorbent material is 100 wt. %.

According to the second embodiment of the first aspect of the present invention, preferably, the XRD pattern of the manganese-based adsorbent material shows characteristic peaks at 2θ positions of 12.2 ± 0.5°, 24.7 ± 0.5°, 36.8 ± 0.5° and 66.3 ± 0.5°, respectively; and the half-width of the diffraction peak at 12.2 ± 0.5° is greater than 0.5°.

According to the second embodiment of the first aspect of the present invention, preferably, the manganese-based adsorbent material has a specific surface area of 200 - 350 m²/g and a pore volume of 0.2 - 0.9 ml/g; more preferably, the specific surface area is 240 - 320 m²/g and the pore volume is 0.4 - 0.7 ml/g.

According to the second embodiment of the first aspect of the invention, the manganese in the manganese-based adsorbent material is mainly present in the form of manganese oxide, particularly in the form of MnO₂, more preferably mainly present in the form of δ -MnO₂. The manganese-based adsorbent material is advantageously used for removing sulfur-containing impurities, such as hydrogen sulfide and carbonyl sulfide, from gases, for example hydrogen.

According to the second embodiment of the first aspect of the present invention, the manganese-based adsorbent material has a longer breakthrough time for hydrogen feed gas containing hydrogen sulfide (the breakthrough time refers to the time when the content of hydrogen sulfide exceeds the detection limit; the longer the breakthrough time, the better the adsorption and desulfurization performance of the sample). It exhibits superior performance in hydrogen purification reactions, and the sulfide content in the purified hydrogen can meet the content requirements for sulfide impurities in hydrogen used in fuel cells. Furthermore, it fully utilizes the Mn element in the stock solution as separated of the graphite oxidation process, eliminating the need to add an additional manganese source and reducing the preparation cost of the manganese-based adsorbent material.

Alternatively, according to a third embodiment of the first aspect of the present invention, preferably, the manganese-based adsorbent material contains 55-63wt. % Mn, preferably 58-61wt. % Mn, and 0.01-1 wt. % C elements, based on the mass of the manganese-based adsorbent material. The Mn element content in the manganese-based adsorbent material accounts for 95% or more of the Mn element content in the stock solution as separated, preferably 98% or more.

According to the third embodiment of the first aspect of the present invention, preferably, the XRD pattern of the manganese-based adsorbent material shows characteristic peaks at 2θ positions of 12.1 ± 0.5°, 24.6 ± 0.4°, 36.9 ± 0.4° and 66.2 ± 0.4°, respectively; and the half-width of the diffraction peak at 12.1 ± 0.5° is greater than 0.4°.

According to the third embodiment of the first aspect of the present invention, preferably, the manganese-based adsorbent material has a specific surface area of 10 - 30 m²/g, more preferably 15 - 25 m²/g, and a pore volume of 0.01 - 0.1 ml/g, more preferably 0.02 - 0.08 ml/g.

According to the third embodiment of the first aspect of the invention, preferably, the manganese in the manganese-based adsorbent material is mainly present in the form of manganese oxide, particularly in the form of MnO₂, and more preferably mainly present in the form of δ -MnO₂. The manganese-based adsorbent material is advantageously used for removing formaldehyde impurity from gases, such as hydrogen, and can also be used for removing sulfur-containing impurities, such as hydrogen sulfide and carbonyl sulfide, from gases, such as hydrogen.

According to the third embodiment of the first aspect of the present invention, the manganese-based adsorbent material has a moderate specific surface area and pore volume, which can effectively remove formaldehyde from a feed. It can maintain excellent formaldehyde removal performance after 12 hours of reaction, and no nitrate needs to be added during the reaction process, which reduces the cost of material preparation. At the same time, it significantly reduces the content of Mn element in the stock solution as separated, and solves the environmental pollution problem caused by wastewater discharge during the graphite oxidation process.

The manganese-based adsorbent material contains carbon element present in the form of graphite oxide. The presence of graphite oxide plays a positive role in the removal of impurities such as sulfides and formaldehyde from gases by the manganese-based adsorbent material.

### Second Aspect

A second aspect of the present invention provides a method for coproducing graphite oxide and a manganese-based adsorbent material, wherein the method comprises:
S1. graphite, a Brønsted acid, and a permanganate, preferably potassium permanganate, are mixed to obtain a mixture, and then the resulting mixture is heated to carry out a reaction.
S2. water and/or hydrogen peroxide is added to the reaction material obtained in step S1 to continue the reaction, and the obtained reaction material is separated into a stock solution as separated and a solid phase through solid-liquid separation, and the solid phase is recovered to obtain graphite oxide;
S3. the stock solution as separated in step S2 is subjected to a hydrothermal reaction with or without addition of an auxiliary agent, and the resulting solid product is separated out to obtain the manganese-based adsorbent material,
wherein the conditions for the hydrothermal reaction in step S3 include: a temperature of 100 - 200°C, preferably 120 - 200°C, more preferably 150 - 180°C, and a period of 1 - 72h, preferably 12 - 36h.

Optionally, the graphite is one or more of natural flake graphite, natural cryptocrystalline graphite, and artificial graphite, preferably artificial graphite;
the graphite has a carbon content of 95 wt. % or more, preferably 98 wt. % or more, further preferably 99 wt. % or more, and more preferably 99.9 wt. % or more; an ash content of 5% or less, preferably 2% or less, and more preferably 0.1 wt. % or less; and a mesh size of 20 to 2000 mesh, preferably 20 to 500 mesh, further preferably 50 to 200 mesh, and more preferably 50 to 100 mesh.

Optionally, the Brønsted acid is selected from one or more of sulfuric acid, nitric acid, and perchloric acid;
the concentration A₀ of the Brønsted acid is any concentration between M-10% and M+10%, preferably A₀ is any concentration between M-5% and M+5%, where M is the highest concentration of the Brønsted acid, and more preferably the highest concentration of the Brønsted acid in analytical reagent grade. In this context, the above concentrations refer to the concentration of the acid in water.

Optionally, the mass ratio of the Brønsted acid to the graphite is (10 - 200): 1, preferably (20 - 150): 1, more preferably (25 - 100): 1, and even more preferably (30 - 100): 1.

In the above embodiments, by selecting preferred types of graphite and Brønsted acid, as well as the carbon content and concentration, the performance of the prepared graphite oxide is advantageously improved.

In step S1, the mass ratio of potassium permanganate to graphite is (1 - 15): 1, (1 - 12): 1, (1 - 9): 1, or (2 - 8): 1, or (1 - 6): 1, or (3 - 6): 1, or (3.5 - 5.5): 1.

In the above embodiments, when the amount of potassium permanganate used is small, for example, when the mass ratio of potassium permanganate to graphite is (1 - 6): 1, the method of the present invention does not require the addition of an additional manganese source, and no sodium nitrate is added during the reaction process, thus reducing the preparation cost of manganese oxide. Furthermore, the manganese-based adsorbent material obtained during the preparation of graphite oxide exhibits excellent performance in treating wastewater produced during preparation, significantly reducing the content of manganese ions and other pollutants in the wastewater, thus solving the problem of environmental pollution caused by wastewater discharge.

The reaction process does not involve the addition of sodium nitrate, which significantly improves process safety and facilitates subsequent preparation of manganese oxides and wastewater treatment, significantly reducing the cost of graphite oxidation and the preparation of manganese-based adsorbent material.

According to another embodiment, the mass ratio of potassium permanganate to graphite in the preparation of graphite oxide is 6.5 or higher. For example, the mass ratio of potassium permanganate to graphite is (8 - 15): 1, preferably (9 - 12): 1. With a higher mass ratio of potassium permanganate to graphite, a higher amount of potassium permanganate is used in the preparation of graphite oxide, resulting in a faster oxidation rate and better oxidation effect. Furthermore, no additional manganese source needs to be added when preparing manganese oxide, reducing the preparation cost of manganese oxide.

According to a preferred embodiment, in step S1, the temperature for the heating reaction is 30 - 60 °C, preferably 40 - 50 °C, and the time is 0.2 - 6h, preferably 0.5 - 4h.

According to a preferred embodiment, sodium nitrate is not added in step S1.

According to a preferred embodiment, in step S1, potassium permanganate is added in multiple batches. The mass ratio of potassium permanganate in each batch to graphite is (0.05 - 2): 1, preferably (0.1 - 2): 1, for example (0.05 - 1): 1, more preferably (0.2 - 1): 1, and even more preferably (0.1 - 0.5): 1.

According to a preferred embodiment, in step S1, the temperature during mixing is controlled to equal to or below 40°C, preferably equal to or below 30°C, more preferably equal to or below 20°C, and the mixing time is 0.2 - 12h, for example 0.1 - 10h, preferably 0.5 - 6h, for example 0.5 - 5h; the temperature for heating reaction is 30 - 60°C, preferably 40 - 50°C. Sodium nitrate is not added during the reaction in step S1. The mixing can be carried out by stirring.

In another specific embodiment of the present invention, graphite and 98% concentrated sulfuric acid are added to a beaker placed in an ice-water bath (<5°C) and stirred until homogeneous. Potassium permanganate is then slowly added in batches while stirring. After the potassium permanganate is added, the reaction is continued while stirring in a 40°C water bath for 0.5 hours. The ratio of the reactants is graphite : concentrated sulfuric acid : potassium permanganate = 1g : 15 - 35ml : 6.5 - 15g.

In step S2, the ratio of the addition amount of water to graphite by mass is (50 - 2000): 1, preferably (80 - 250): 1.

In step S2, the reaction time is 0.1 - 5h, preferably 0.5 - 2h. Preferably, the reaction temperature is 70 - 120 °C, more preferably 85 - 105 °C.

Optionally, in step S2, hydrogen peroxide is added instead of or in addition to water. Optionally, the mass ratio of the added hydrogen peroxide to the graphite is (20 - 500): 1, preferably (50 - 200): 1, and the mass concentration of the hydrogen peroxide is 0.01 - 5%, preferably 0.05 - 1%.

Optionally, in step S2, the time for mixing and heating reacting the graphite and hydrogen peroxide is 0.1 - 6h, preferably 0.5 - 3h, and the temperature for heating reaction is 60 - 99 °C, preferably 85 - 95°C.

Optionally, the carbon to oxygen molar ratio of the graphite oxide is 0.9 to 2.5, preferably 1.1 to 2.

In a specific embodiment of the present invention, the oxygen content of the graphite oxide is 35-60 wt. %, preferably 40-55 wt. %, and the carbon content is 40-65 wt. %, preferably 45-60 wt. %. In this case, the graphite oxide prepared by the present invention has a high oxygen content, is easy to disperse, has plenty of lamellar defects, and exhibits strong chelating properties, which will have significant advantages in aspects such as adsorbing heavy metal ions from wastewater and soil remediation.

Optionally, the carbon to oxygen molar ratio of the graphite oxide is 2 to 4, preferably 2.5 to 3.5.

According to a specific embodiment of the present invention, the oxygen content of the graphite oxide is 15-40 wt. %, preferably 20-35 wt. %, and the carbon content is 60-85 wt. %, preferably 65-80 wt. %. In this case, the graphite oxide prepared by the present invention has a moderate oxygen content and exhibits significant advantages in aspects such as fire resistance and flame retardancy after thermal expansion exfoliation.

In a specific embodiment of the present invention, the stock solution as separated of the graphite oxidation contains 40-100 g/L of Mn element (calculated as divalent manganese ion), preferably 50-80 g/L; 25-80 g/L of potassium element (calculated as potassium ion), preferably 35-60 g/L; 10-200 g/L of sulfur element (calculated as sulfate ion), preferably 40-100 g/L; and 5-50 g/L of carbon element (calculated as carbon atom), preferably 8-20 g/L.

In a further preferred specific embodiment, the stock solution as separated of graphite oxidation is an aqueous solution, mainly containing manganese, potassium, sulfur, and carbon elements. The Mn element content is 64 g/L, calculated as divalent manganese ions; the potassium element content is 37 g/L, calculated as potassium ions; the sulfur element content is 102 g/L, calculated as sulfate ions; and the C element content is 6.5 g/L, calculated as carbon atoms. The carbon mainly comes from soluble graphite oxide residues in the stock solution.

According to an aspect of the invention, a stock solution as separated and a solid phase are obtained through solid-liquid separation in step S2, and the solid phase is recovered to obtain graphite oxide. Solid phase recovery refers to drying after an optional washing step. Washing is a conventional operation in the art, such as water washing; wherein the drying step is conventional drying, vacuum drying, or freeze drying, wherein conventional drying is performed at a temperature of 80 - 200°C for 1 - 48h; vacuum drying is performed at a temperature of 20 - 100°C for 1 - 24h; and freeze drying is performed at a temperature of -60 to -20°C for 12 - 48h.

In step S3, the conditions for the hydrothermal treatment include: a temperature of 100 - 200 °C, preferably 120 - 200 °C, more preferably 150 - 180 °C, and a period of 1 - 72 h, preferably 12 - 36 h.

Optionally, step S3 includes:
(1) the stock solution as separated is optionally mixed with water to obtain a mixture, wherein the mass ratio of the stock solution as separated to water is 1:(0 - 10), preferably 1:(1 - 5);
(2) the mixture is subjected to hydrothermal (crystallization) treatment, the solid product is taken out, and then washed, dried and optionally calcined to obtain the manganese-based adsorbent material.

In a specific embodiment of the present invention, the hydrothermal (crystallization) conditions include: a temperature of 100 - 200 °C under autogenous pressure, preferably 110 - 160 °C, more preferably 100 - 150 °C; and a period of 1 - 72 h, for example 2 - 72 h, preferably 4 - 36 h, more preferably 2 - 24 h.

In some preferred embodiments of the present invention, an auxiliary agent is added in step S3. The auxiliary agent is a persulfate or hypochlorite, preferably one or more of ammonium persulfate, sodium persulfate, potassium persulfate, and sodium hypochlorite, more preferably ammonium persulfate and potassium persulfate, and the mass ratio of the auxiliary agent to the graphite is (0.2 - 10): 1, preferably (0.5 - 5): 1, more preferably (1 - 3): 1.

In the above embodiments, by controlling the mass ratio of the auxiliary agent to graphite and the hydrothermal reaction conditions within the preferred ranges to conduct reaction, it is beneficial to improve various properties of manganese oxide and graphite oxide.

In step S3, the calcination conditions include: a temperature of 250 - 700 °C, preferably 300 - 500 °C, a period of 1 - 12 h, preferably 2 - 6 h, and a pressure of 0.1 - 1 MPa, preferably 0.1 - 0.5 MPa.

The present invention produces manganese oxides crystalline powder while preparing graphite oxide. Furthermore, the method of present invention can significantly reduce the content of manganese ions and the like in wastewater. Generally, the manganese ion content is less than 50 ppm, which can be directly discharged, thus solving the problem of environmental pollution caused by wastewater discharge during the preparation of graphite oxide.

According to a first embodiment of the second aspect of the present invention, a method for co-producing graphite oxide and a manganese-based adsorbent material is provided, wherein the method comprises:
S1. after mixing graphite with a Brønsted acid, permanganate, preferably potassium permanganate, is added, preferably potassium permanganate is added in batches, and then the resulting mixture is heated to react;
S2. water is added to the reaction material obtained in step S1, and the obtained reaction material is separated into a stock solution as separated and a solid phase through solid-liquid separation, wherein the solid phase is recovered to obtain graphite oxide;
S3. the stock solution as separated in step S2 is subjected to a hydrothermal reaction with addition of an auxiliary agent, and the resulting solid product is separated out to obtain the manganese-based adsorbent material;
wherein the auxiliary agent is a persulfate or a hypochlorite, preferably one or more of ammonium persulfate, sodium persulfate, potassium persulfate and sodium hypochlorite, and the mass ratio of the auxiliary agent to the graphite is (0.2 - 10): 1;
wherein the conditions for the hydrothermal reaction include: a temperature of 100 - 200°C and a period of 1 - 72h.

Optionally, the mass ratio of the auxiliary agent to the graphite is (0.5 - 5): 1;
Optionally, the conditions for the hydrothermal reaction include: a temperature of 100 - 150°C and a period of 2 - 24h.

Optionally, the oxygen content of the graphite oxide is 15-40 wt. %, and the carbon content of the graphite oxide is 60-85 wt. %.

According to the first embodiment of the second aspect of the present invention, in step S1 of the method, the mass ratio of potassium permanganate to graphite is (2 - 8): 1, preferably (3 - 6): 1.

Wherein, in the case of adding potassium permanganate in batches, the mass ratio of potassium permanganate added in each batch to graphite is (0.05 - 1): 1, preferably (0.1 - 0.5): 1;

The mass ratio of water addition amount to graphite is (50 - 2000): 1, preferably (80 - 250): 1.

Optionally, the method further includes:
in step S1, after adding potassium permanganate in batches and mixing, the temperature is controlled to equal to or below 40 °C, preferably equal to or below 30 °C, more preferably equal to or below 20 °C, and stirred for 0.2 - 12h; no sodium nitrate and hydrogen peroxide is added during the reaction; the conditions for the heating reaction include: a temperature of 30 - 60 °C and a period of 0.2 - 6h;
in step S2, the water is added over a period of 0.1 - 5 h.

The manganese-based adsorbent material according to the first embodiment of the first aspect of the present invention is prepared by a method according to the first embodiment of the second aspect of the present invention.

According to a second embodiment of the second aspect of the present invention, a method for preparing a manganese-based adsorbent material by oxidizing graphite and treating the wastewater generated from graphite oxidation is provided, wherein the method includes:
S1. graphite, a Brønsted acid and a permanganate, preferably potassium permanganate, are mixed, and the resulting mixture are heated to carry out a reaction;
S2. water is added to the reaction material obtained in step S1 while stirring to continue the reaction, and the obtained reaction material is separated into a stock solution as separated and a solid phase through solid-liquid separation, and the solid phase is recovered to obtain graphite oxide;
S3. the stock solution as separated in step S2 is subjected to a hydrothermal treatment, and the resulting solid product is separated out to obtain the manganese-based adsorbent material;
in step S1, the mass ratio of potassium permanganate to graphite is 6.5 or more. Optionally, in step S1, the mass ratio of potassium permanganate to graphite is 8 to 15, preferably 9 to 12.

Optionally, sodium nitrate and hydrogen peroxide are not added during the reaction process of the method.

Optionally, the oxygen content of the graphite oxide is 35-60 wt. %, and the carbon content of the graphite oxide is 40-65 wt. %.

Optionally, the stock solution as separated of the graphite oxidation contains 40-100 g/L of Mn element (calculated as divalent manganese ion), 25-80 g/L of potassium element (calculated as potassium ion), 10-200 g/L of sulfur element (calculated as sulfate ion), and 5-50 g/L of C element (calculated as carbon atom).

Optionally, step S3 includes:
(1) the stock solution as separated is optionally mixed with water to obtain a mixture, wherein the mass ratio of the stock solution as separated to water is 1:(0 - 10).
(2) the mixture is subjected to hydrothermal treatment, the solid product is taken out and then washed, dried and optionally calcined to obtain the manganese-based adsorbent material;

wherein he hydrothermal conditions include: a temperature of 100 - 200°C under autogenous pressure, and a period of 2 - 72h;
the calcination conditions include: a temperature of 250 - 700 °C, a period of 1 - 12 h, and a pressure of 0.1 - 1 MPa.

In a specific embodiment of the present invention, graphite and 98% concentrated sulfuric acid are added to a beaker placed in an ice-water bath (<5 ° C) and stirred until homogeneous. Potassium permanganate is then slowly added in batches while stirring. After the potassium permanganate is added, the reaction is continued while stirring in a 40°C warm water bath for 0.5 h. Then, an appropriate amount of deionized water is added, and the temperature of the water bath is raised to 95-98°C for reaction for 0.5 h. The beaker is taken out from the water bath, and deionized water at approximately 60°C is added. The mixture is stirred until the temperature drops to or below 30°C. After stirring until homogeneous, the solid graphite oxide is separated by filtration to obtain the stock solution as separated of the graphite oxidation. The ratio of the above reactants is graphite : concentrated sulfuric acid : potassium permanganate : water = 1g : 15-35ml : 6.5-15g: 50-500ml.

The manganese-based adsorbent material according to the second embodiment of the first aspect of the present invention is prepared by the method according to the second embodiment of the second aspect of the present invention.

According to a third embodiment of the second aspect of the present invention, a method for co-producing graphite oxide and a manganese-based adsorbent material is provided, wherein the method comprises:
S1. graphite, a Brønsted acid, and a permanganate, preferably potassium permanganate, are mixed to obtain a mixture, and then the resulting mixture is heated to carry out a reaction;
S2. hydrogen peroxide is added to the reaction material obtained in step S1 to continue the reaction, and the obtained reaction material is separated into a stock solution as separated and a solid phase through solid-liquid separation, and the solid phase is recovered to obtain graphite oxide;
S3. the stock solution as separated in step S2 is subjected to a hydrothermal treatment, and the resulting solid material is separated out to obtain the manganese-based adsorbent material,
wherein the mass ratio of the added hydrogen peroxide to graphite is (20 - 500): 1, preferably (50 - 200): 1, and the mass concentration of hydrogen peroxide is 0.01 - 5%, preferably 0.05 - 1%;
wherein the mass ratio of potassium permanganate to graphite is (1 - 6): 1, preferably (3 - 6): 1, and more preferably (3.5 - 5.5): 1.

According to a specific embodiment of the method of the third embodiment of the second aspect of the present invention, graphite is first mixed with concentrated acid and potassium permanganate and then is heated and reacted for a certain period of time, then hydrogen peroxide is added and is heated and reacted for a certain period of time. After solid-liquid separation, the stock solution as separated is subjected to hydrothermal reaction, thereby achieving the preparation of manganese-based adsorbent material while oxidizing graphite. The amount of potassium permanganate used in the graphite oxidation process is relatively small, and no sodium nitrate is added during the reaction, significantly improving process safety and facilitating subsequent preparation of the manganese-based adsorbent material and wastewater treatment, thus significantly reducing the cost of graphite oxidation and the preparation of the manganese-based adsorbent material.

The graphite oxide prepared by this invention has a moderate oxygen content and exhibits significant advantages in aspects such as fire resistance and flame retardancy after thermal expansion exfoliation.

In a specific embodiment of the present invention, the method further includes:
in step S1, potassium permanganate is added in batches to the mixture of graphite and a Brønsted acid, wherein the mass ratio of potassium permanganate added in each batch to graphite is (0.1 - 2): 1, preferably (0.2 - 1): 1; during the mixing process, the temperature is controlled to equal to or below 40 °C, preferably equal to or below 30 °C, more preferably equal to or below 20 °C, and the mixing time is 0.1 - 10 h, preferably 0.5 - 5 h; wherein the temperature for the heating reaction is 30 - 60 °C, preferably 40 - 50 °C; wherein sodium nitrate is not added during the reaction;
in step S2, the time for mixing, heating reacting the graphite and hydrogen peroxide is 0.1 - 6h, preferably 0.5 - 3h, and the temperature for the heating reaction is 60 - 99 °C, preferably 85 - 95 °C;
in step S3, the hydrothermal treatment conditions include: a temperature of 120 - 200°C, preferably 150 - 180°C, and a period of 1 - 72h, preferably 12 - 36h.

The manganese-based adsorbent material according to the third embodiment of the first aspect of the present invention is prepared by the method of the third embodiment of the second aspect of the present invention.

### Third Aspect

A third aspect of the present invention provides a manganese-based adsorbent material prepared according to the second aspect of the present invention.

According to a preferred embodiment, the manganese-based adsorbent material contains 30-55 wt. % of Mn, 0.8-10 wt. % of S, 1-10 wt. % of K, and 0.01-5 wt. % of C elements, based on the mass of the manganese-based adsorbent material;
alternatively, according to another preferred embodiment, the manganese-based adsorbent material contains 25-53 wt. % of Mn, 1-15 wt. % of S, 2-20 wt. % of K, and 0.01-2 wt. % of C elements, based on the mass of the manganese-based adsorbent material;
alternatively, according to another preferred embodiment, based on the mass of the manganese-based adsorbent material, the manganese-based adsorbent material contains 55 - 63 wt. % of Mn, and 0.01 - 1 wt. % of C elements.

According to a preferred embodiment, the XRD pattern of the manganese-based adsorbent material shows characteristic peaks at 20 positions of 28.6 ± 0.5°, 37.4 ± 0.3°, 41.0 ± 0.3°, 42.8 ± 0.3°, 56.6 ± 0.3°, 59.4 ± 0.3°, 64.9 ± 0.3°, and 72.4 ± 0.3°, respectively; and the half-width of the diffraction peak 28.6 ± 0.5° is greater than 0.1°;
alternatively, according to another preferred embodiment, the XRD pattern of the manganese-based adsorbent material shows characteristic peaks at 20 positions of 12.2 ± 0.5°, 24.7 ± 0.5°, 36.8 ± 0.5°, and 66.3 ± 0.5°, respectively; the half-width of the diffraction peak at 12.2 ± 0.5° is greater than 0.5°;
alternatively, according to another preferred embodiment, the XRD pattern of the manganese-based adsorbent material shows characteristic peaks at 20 positions of 12.1 ± 0.5°, 24.6 ± 0.4°, 36.9 ± 0.4° and 66.2 ± 0.4°, respectively; and the half-width of the diffraction peak at 12.1 ± 0.5° is greater than 0.4°.

According to a preferred embodiment, the manganese-based adsorbent material has a specific surface area of 10 - 100 m²/g, preferably 30 - 60 m²/g, a pore volume of 0.05 - 0.5 ml/g, preferably 0.1 - 0.3 ml/g, and a pore size of 12 - 36 nm, preferably 15 - 30 nm.

Alternatively, according to another preferred embodiment, the manganese-based adsorbent material has a specific surface area of 200-350 m²/g and a pore volume of 0.2-0.9 ml/g; preferably, a specific surface area of 240-320 m²/g and a pore volume of 0.4-0.7 ml/g.

Alternatively, according to another preferred embodiment, the manganese-based adsorbent material has a specific surface area of 10 - 30 m²/g, preferably 15 - 25 m²/g, and a pore volume of 0.01 - 0.1 ml/g, preferably 0.02 - 0.08 ml/g.

### Fourth Aspect

A fourth aspect of the present invention provides the use of the manganese-based adsorbent material according to the first aspect or the third aspect or obtained by the method according to the second aspect for removing impurities such as sulfides and formaldehyde from gases.

### Fifth Aspect

A fifth aspect of the present invention provides a method for purifying hydrogen, the method comprising: hydrogen is contacted with the manganese-based adsorbent material provided in the first aspect of the present invention to carry out a purification reaction.

In a specific embodiment of the present invention, the reaction conditions of the hydrogen purification method include: a temperature of 20 - 50 °C, a pressure of 0.1 - 5.0 MPa, and a space velocity of 50 - 10000 h⁻¹; preferably, a temperature of 25 - 40 °C, a pressure of 1 - 3 MPa, and a space velocity of 100 - 5000 h⁻¹.

The volume content of sulfides in the hydrogen is 0.1% to 1%, wherein the content of sulfides in the hydrogen is calculated as hydrogen sulfide.

In this invention, the hydrogen purification method is carried out under relatively low temperature, high concentration, and low space velocity conditions, achieving effective removal of sulfides from hydrogen at temperatures below 50°C. The sulfide content in the purified hydrogen meets the requirements for sulfide impurity content in hydrogen used for fuel cells.

The present invention will be further illustrated with referring to the following examples, but the present invention is not limited thereto.

All reagents used in present invention are commercially available analytical grade reagents.

### Experiment Series 1

### Example 1.1

a. First, 150ml of concentrated sulfuric acid (mass concentration greater than 98%) and 5g of graphite were added to a beaker and mixed to obtain a mixture;
b. Next, 25g of potassium permanganate was added in 5 equal batches to the mixture obtained in step a, and mixed through stirring at 15 °C for 1 hour to obtain a mixture material;
c. The mixture material obtained in step b was stirred and reacted at 45°C under autogenous pressure for 2 hours to obtain a mixed slurry after reaction;
d. 150 ml of 0.05 wt. % hydrogen peroxide was added to the mixed slurry after the reaction in step c, and the reaction continued while stirring at 88°C for 1 h. Then, a fritted glass funnel was used to directly filter and separate the solid and liquid to obtain a graphite oxide solid and filtrated waste liquid;
e. The filtered waste liquid from step d was subjected to hydrothermal treatment at 160°C and under autogenous pressure for 24 hours, and manganese oxide was taken out by solid-liquid separation.

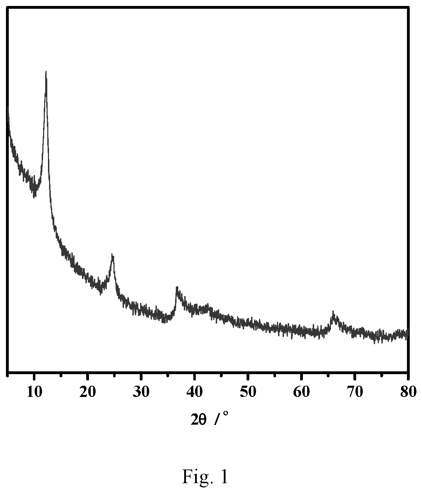

XRD pattern of the prepared manganese oxide is shown in Figure 1.

### Example 1.2

The preparation method of Example 1.1 was employed, except that in step b, the amount of potassium permanganate used was 10g.

### Example 1.3

The preparation method of Example 1.1 was employed, except that in step e, the reaction temperature was 120°C and the hydrothermal treatment time was 2 hours.

### Example 1.4

The preparation method of Example 1.1 was employed, except that in step a, 100 ml of concentrated sulfuric acid was added.

### Example 1.5

The preparation method of Example 1.1 was employed, except that in step c, the reaction temperature was 30°C.

### Example 1.6

The preparation method of Example 1.1 was employed, except that in step d, 450 ml of hydrogen peroxide of the same concentration was added.

### Example 1.7

The preparation method of Example 1.1 was employed, except that in step d, 150 ml of hydrogen peroxide with a mass concentration of 1.5% was added.

### Example 1.8

The preparation method of Example 1.1 was employed, except that in step b, potassium permanganate was added to the mixture obtained in step a all at once.

### Example 1.9

The preparation method of Example 1.1 was employed, except that in step b, the amount of potassium permanganate used was 4g.

### Example 1.10

The preparation method of Example 1.1 was employed, except that in step d, 15 ml of hydrogen peroxide of the same concentration was added.

### Example 1.11

The preparation method of Example 1.1 was employed, except that in step d, 150 ml of hydrogen peroxide with a mass concentration of 6% was added.

### Testing Examples

The XRD patterns of the samples were obtained using a Rigaku D/MaxA-IIIA X-ray diffractometer (Japan). Testing conditions included: Cu target *K α* radiation, voltage 30 kV, current 20 mA, step scanning, scanning range 5° - 80°.

The elemental contents of the samples were determined by XPS on a VGESCA-LABS X-ray photoelectron spectrometer, using Mg *Kα* X-rays as the laser source, and the binding energy of each element in the species on the surface of the desulfurizer was calibrated by the C1s binding energy of the carbon contaminants on the surface.

The temperature nitrogen adsorption-desorption test (BET) was performed on a JW-BK200C specific surface area and pore size analyzer from Beijing Jingwei Gaobo Co., Ltd. Specific surface area and pore volume were calculated using the two-parameter BET equation, and pore distribution was calculated using the BJH method.

The performances of the manganese oxides prepared in the examples of the invention as a formaldehyde adsorbent were determined. The specific steps were as follows: At room temperature and atmospheric pressure, 500 mg of manganese oxide was packed into the middle of a fixed-bed reaction tube with a diameter of 10 mm. Quartz wool was filled at both ends. Formaldehyde with a concentration of 1.0 mg/m³ was introduced at a flow rate of 10 ml/min(the remainder being air). The residual formaldehyde concentration was measured after 1 h and 12 h of reaction, and the formaldehyde removal rate was calculated. The formaldehyde removal rates after 1 h and 12 h of reaction are shown in Table 1. Other characterization results of the prepared samples are shown in Table 2. The XRD pattern of the manganese oxide prepared in Example 1.1 of this invention is shown in Figure 1.

**Table 1.1**

| | Formaldehyde removal rate (%) after 1 hour of reaction | Formaldehyde removal rate (%) after 12 hours of reaction |
|---|---|---|
| Example 1.1 | 96.4 | 96.1 |
| Example 1.2 | 92.2 | 88.7 |
| Example 1.3 | 89.6 | 83.5 |
| Example 1.4 | 90.1 | 85.2 |
| Example 1.5 | 90.7 | 82.6 |
| Example 1.6 | 86.4 | 86.2 |
| Example 1.7 | 85.8 | 85.1 |
| Example 1.8 | 89.6 | 86.8 |
| Example 1.9 | 87.1 | 71.5 |
| Example 1.10 | 85.3 | 68.2 |
| Example 1.11 | 77.5 | 69.4 |

**Table 1.2**

| | Specific surface area of manganese oxides/m²/g | Manganese oxide pore volume /ml/g | Mn element content in manganese oxides/wt.% | Percentage of Mn element content in manganese oxides accounting for Mn element content in the filtered waste liquid/% |
|---|---|---|---|---|
| Example 1.1 | 24 | 0.05 | 59.1 | 98.6 |
| Example 1.2 | 30 | 0.07 | 54.6 | 95.9 |
| Example 1.3 | 18 | 0.06 | 54.3 | 96.2 |
| Example 1.4 | 9 | 0.04 | 62.9 | 95.7 |
| Example 1.5 | 23 | 0.05 | 57.3 | 95.1 |
| Example 1.6 | 17 | 0.06 | 60.8 | 95.8 |
| Example 1.7 | 14 | 0.04 | 61.6 | 96.0 |
| Example 1.8 | 7 | 0.02 | 63.1 | 95.0 |
| Example 1.9 | 66 | 0.11 | 52.7 | 63.5 |
| Example 1.10 | 53 | 0.10 | 52.2 | 64.8 |
| Example 1.11 | 4 | 0.01 | 63.0 | 93.1 |

As can be seen from the testing results in Tables 1.1 and 1.2, the manganese oxide materials prepared by the method provided by this invention have moderate specific surface areas and pore volumes when they fall within the preferred ranges. They can effectively remove formaldehyde from the feed and maintain excellent formaldehyde removal performance even after 12 hours of reaction. Moreover, no nitrate needs to be added during the reaction, which reduces the cost for preparation of the material. At the same time, it significantly reduces the Mn content in the filtrated waste liquid, thus solving the problem of environmental pollution caused by wastewater discharge during the graphite oxidation process.

As can be seen from the testing results of Examples 1.1 to 1.8, when the preparation method and the amounts of hydrogen peroxide and potassium permanganate are within the preferred ranges of the first aspect of the present invention, the effects and performances of the products prepared by the present invention can be improved. A comparison of Example 1.1 and Examples 1.2 to 1.8 shows that when the amount and mass concentration of hydrogen peroxide, the amount of potassium permanganate, the type and amount of concentrated acid, the amount and batches of potassium permanganate added, the heating temperature, and the stirring time are all within the preferred ranges of the present invention, the formaldehyde removal performances of the manganese oxide materials prepared by the present invention can be further improved.

As can be seen from the testing results of Examples 1.9 to 1.11, in Example 1.9, the amount of potassium permanganate was too low, resulting in a low Mn content in the filtered waste liquid of graphite oxidation. This led to a prepared manganese oxide with a low Mn content, a large specific surface area and a large pore volume, and poor product performance. The removal rate of formaldehyde from feed after 1 hour of reaction was significantly worse than that in Example 1.1, and the removal performance of formaldehyde from feed significantly decreased after 12 hours of reaction. In Example 1.10, the amount of hydrogen peroxide was outside the preferred range of the first aspect of the invention, resulting in an insufficient oxidation reaction. This led to a prepared manganese oxide with a large specific surface area and a large pore volume, a decreased product quality, and a lower removal rate of formaldehyde from feed after both 1 hour and 12 hours of reaction compared to Examples 1.1 to 1.9. In Example 1.11, the concentration of hydrogen peroxide used was too high, resulting in a prepared manganese oxide with a small specific surface area and a small pore volume, and a significant decreased formaldehyde removal rate after both 1 hour and 12 hours of reaction.

### Experiment Series 2

### Example 2.1

a. A modified Hummer method was used to prepare graphite oxide. 5g of graphite and 98% concentrated sulfuric acid were added to a beaker placed in an ice-water bath ( ~ 5 °C ) and stirred until homogeneous. Potassium permanganate was slowly added in 5 batches while stirring. After the potassium permanganate was added, the reaction was continued in a 40°C warm water bath with stirring for 0.5h. Then, an appropriate amount of deionized water was added, and the temperature of the water bath was raised to 95 - 98°C for reaction for 0.5h. The beaker was removed from the water bath, and deionized water at approximately 60°C was added. Stirring was continued until the temperature dropped to equal to or below 30°C. After stirring until homogeneous, the graphite oxide solid was separated by filtration to obtain the filtrated stock solution of graphite oxidation. The ratio of the above reactants was graphite : concentrated sulfuric acid : potassium permanganate : water = 1g : 30ml : 10g : 100ml. The resulting material was subjected to solid-liquid separation to obtain the filtrated stock solution as liquid phase and the graphite oxide as solid phase. The graphite oxide solid phase was vacuum dried at 80 °C for 6h to obtain graphite oxide powder. The filtered stock solution contained 64 g/L of Mn (calculated as divalent manganese ion), 37 g/L of potassium (calculated as potassium ion), 102 g/L of sulfur (calculated as sulfate ion), and 6.5 g/L of carbon (calculated as carbon atom); the graphite oxide contained 43 wt. % of oxygen and 57 wt. % of carbon.
b. 50 mL of water and 50 g of filtrated stock solution of graphite oxidation were added to a beaker and mixed to obtain a mixture;
c. the mixture obtained in step b was subjected to hydrothermal crystallization treatment at 140°C under autogenous pressure for 12 h;
d. the manganese-based adsorbent material obtained after hydrothermal treatment was filtered, washed, dried at 80°C for 6 hours, and then calcined at 300 °C for 4 hours.

### Example 2.2

The preparation method of Example 2.1 was employed, except that in step d, the calcination temperature was 700°C and the time was 1 h.

### Example 2.3

The preparation method of Example 2.1 was employed, except that calcination was not performed in step d.

### Example 2.4

The preparation method of Example 2.1 was employed, except that in step c, the hydrothermal crystallization temperature was 180°C.

### Example 2.5

The preparation method of Example 2.1 was employed, except that in step a, the ratio of the reactants used was graphite : concentrated sulfuric acid : potassium permanganate : water = 1g : 50ml : 10g: 150ml; the filtrated stock solution of graphite oxidation contained 41g/L of Mn (calculated as divalent manganese ion), 26g/L of potassium (calculated as potassium ion), 195g/L of sulfur (calculated as sulfate ion), and 5.1g/L of C (calculated as carbon atom); the oxygen content of graphite oxide was 48 wt. %, and the carbon content was 52 wt. %.

### Example 2.6

The preparation method of Example 2.1 was employed, except that in step a, the mass ratio of potassium permanganate to graphite was 6 for preparing the graphite oxide; the oxygen content of the graphite oxide was 33 wt. % and the carbon content was 67 wt. %.

### Testing Examples

The manganese-based adsorbent materials in Examples 2.1-2.5 and 2.6 and potassium permanganate were tested as follows:
The XRD patterns of the samples were obtained using a Rigaku D/MaxA-IIIA X-ray diffractometer (Japan). Test conditions included: Cu target *Kα* radiation, tube voltage 30 kV, tube current 20 mA, step scanning, scanning range 5°-70°.

The average particle sizes of the prepared products were determined by scanning electron microscopy (ISI-60A electron microscope from ISI Corporation, USA, accelerating voltage 20kV), and random sampling were taken for particle size statistics.

The elemental contents of the samples were determined by XPS on a VGESCA-LABS X-ray photoelectron spectrometer, using Mg *Kα* X-rays as the laser source, and the binding energy of each element in the species on the surface of the desulfurizer was calibrated by the C1s binding energy (284.6 eV) of the carbon contaminants on the surface.

The temperature nitrogen adsorption-desorption test (BET) was performed on a JW-BK200C specific surface area and pore size analyzer from Beijing Jingwei Gaobo Co., Ltd. Specific surface area and pore volume were calculated using the two-parameter BET equation, and pore distribution was calculated using the BJH method. The sulfide content in the hydrogen gas after adsorption by the adsorbent was analyzed using online chromatography (Shimadzu Nexis-2030, Japan) and an SCD fluorescence detector (SCD-2030).

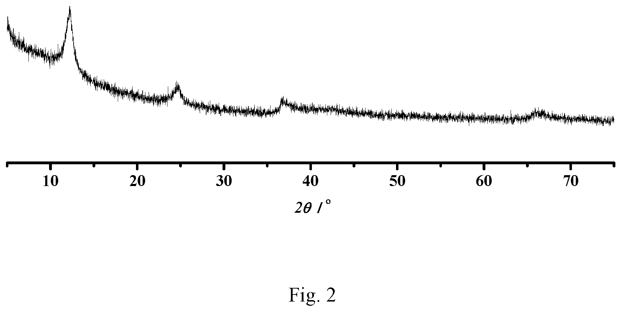

290 mg, in each case, of the manganese-based adsorbent materials prepared in the examples of the invention, and of potassium permanganate as an adsorbent, were loaded into the reactor isothermal section of a passivated fixed-bed microreactor with an inner diameter of 12 mm and a length of 500 mm. Quartz sand was filled both above and below the reactor isothermal section. The hydrogen feedstock standard gas contained 0.5% hydrogen sulfide by volume. The purification reaction was carried out by introducing the hydrogen gas at 30 ml/min at 40 °C and 2.1 MPa. The hydrogen sulfide content in the purified hydrogen gas was analyzed online every 5 minutes. The breakthrough time was defined as the time from the start of hydrogen gas introduction until the hydrogen sulfide content in the purified hydrogen gas exceeded 0.004 ppm. The breakthrough time testing results for each sample are shown in Table 2.1, and other characterization results for each sample are shown in Table 2.2. The XRD pattern of the manganese-based adsorbent material prepared in Example 2.1 of this invention is shown in Figure 2.

**Table 2.1**

| | Breakthrough time /min |
|---|---|
| Example 2.1 | 160 |
| Example 2.2 | 130 |
| Example 2.3 | 115 |
| Example 2.4 | 90 |
| Example 2.5 | 105 |
| Example 2.6 | 35 |
| potassium permanganate | 10 |

**Table 2.2**

| | Specific surface area /m²/g | Pore volume /ml/g | Mn element content / wt. % | S element content / wt. % | K element content / wt. % |
|---|---|---|---|---|---|
| Example 2.1 | 264 | 0.46 | 48.3 | 3.1 | 6.9 |
| Example 2.2 | 226 | 0.25 | 50.2 | 1.1 | 7.3 |
| Example 2.3 | 238 | 0.59 | 37.9 | 14.3 | 5.1 |
| Example 2.4 | 209 | 0.33 | 49.6 | 3.4 | 7.0 |
| Example 2.5 | 201 | 0.24 | 42.5 | 11.7 | 5.4 |
| Example 2.6 | 87 | 0.31 | 41.8 | 9.6 | 6.1 |
| potassium permanganate | 3 | / | 34.8 | / | 24.7 |

As can be seen from the testing results in Tables 2.1 and 2.2, the manganese-based adsorbent materials prepared by the method according to the preferred embodiments of this invention have a longer breakthrough time for hydrogen feed gas containing hydrogen sulfide, exhibiting superior performance in hydrogen purification reactions. The sulfide content in the purified hydrogen can meet the content requirements for sulfide impurities in hydrogen used in fuel cells. And moreover the Mn element in the filtrated stock solution of graphite oxidation is fully utilized without the need to add an additional manganese source, thus reducing the preparation cost of manganese oxide.

As can be seen from the testing results of Examples 2.1 to 2.5, when the preparation method of the filtrated stock solution of graphite oxidation, the mass ratio of potassium permanganate to graphite during the preparation of graphite oxide, the element content in the filtrated stock solution of graphite oxidation, the hydrothermal crystallization treatment conditions, and the calcination conditions are within the defined ranges of this invention, the effects and performances of the products prepared by this invention can be further improved.

The testing results from Example 2.6 and from potassium permanganate as adsorbent show that, since the mass ratio of potassium permanganate to graphite in Example 2.6 was not within the preferred range, the breakthrough time of hydrogen feed gas was significantly shorter than those in Examples 2.1-2.5. Therefore, the performance of the prepared manganese-based adsorbent material in the hydrogen purification reaction was worse than those of the examples according to the preferred embodiments of the present invention. Furthermore, when potassium permanganate was used directly as the adsorbent, the breakthrough time of hydrogen feed gas is even shorter, indicating that its adsorption performance in the hydrogen purification reaction is poor.

### Experiment Series 3

### Example 3.1

a. 150ml of concentrated sulfuric acid (mass concentration greater than 98%) and 5g of graphite were simultaneously added to a beaker and mixed to obtain a mixture;
b. 25g of potassium permanganate was added in 5 equal batches to the mixture obtained in step a, and mixed through stirring at 10 °C for 1 hour to obtain a mixture material;
c. The mixture material obtained in step b was stirred and reacted at 35°C under autogenous pressure for 2 h;
d. 150 ml of water was added to the mixture material in step c, continued to reaction while stirring at 90°C for 1 h, and then filtered to obtain solid graphite oxide and a stock solution as separated;
e. The stock solution as separated from step d was mixed with 5g of potassium persulfate and hydrothermally treated for 24h at 120°C and under autogenous pressure, and solid phase manganese oxide was taken out by solid-liquid separation.

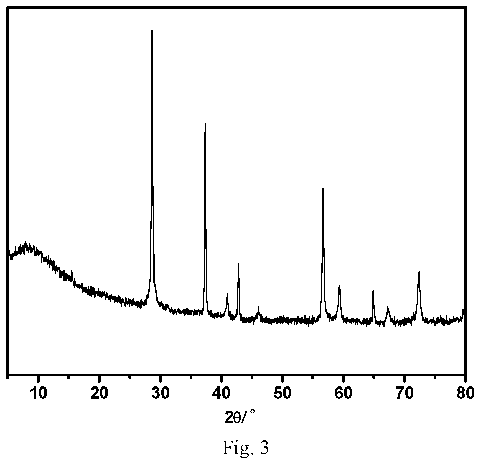

XRD pattern of the prepared manganese oxide is shown in Figure 3.

### Example 3.2

The preparation method of Example 3.1 was employed, except that in step e, the stock solution as separated in step d was mixed with 1g of potassium persulfate.

### Example 3.3

The preparation method of Example 3.1 was employed, except that in step e, the reaction temperature was 160°C and the hydrothermal treatment time was 2 hours.

### Example 3.4

The preparation method of Example 3.1 was employed, except that in step e, 5g of potassium persulfate was replaced with 5g of ammonium persulfate.

### Example 3.5

The preparation method of Example 3.1 was employed, except that in step a, 100 ml of concentrated sulfuric acid was added.

### Example 3.6

The preparation method of Example 3.1 was employed, except that in step b, 15g of potassium permanganate was added.

### Example 3.7

The preparation method of Example 3.1 was employed, except that in step c, the reaction temperature was 30°C.

### Example 3.8

The preparation method of Example 3.1 was employed, except that in step d, 450 ml of water was added.

### Example 3.9

The preparation method of Example 3.1 was employed, except that in step b, the mass ratio of potassium permanganate added in each batch to graphite was 5:3, that is, potassium permanganate was added in 3 batches.

### Example 3.10

The preparation method of Example 3.1 was employed, except that in step a, 150 ml of concentrated nitric acid was added instead of concentrated sulfuric acid.

### Example 3.11

The preparation method of Example 3.1 was employed, except that in step b, 25g of potassium permanganate was added to the mixture obtained in step a all at once.

### Example 3.12

The preparation method of Example 3.1 was employed, except that in step e, the reaction temperature was 250°C and the hydrothermal treatment time was 96 h.

### Example 3.13

The preparation method of Example 3.1 was employed, except that in step e, the stock solution as separated in step d was mixed with 30g of potassium persulfate.

### Testing Examples

The XRD patterns of the samples were obtained using a Rigaku D/MaxA-IIIA X-ray diffractometer (Japan). Testing conditions included: Cu target *K α* radiation, voltage 30 kV, current 20 mA, step scanning, scanning range 5°-80°.

The elemental contents of the samples were determined by XPS on a VGESCA-LABS X-ray photoelectron spectrometer, using Mg *Kα* X-rays as the laser source, and the binding energy of each element in the species on the surface of the desulfurizer was calibrated by the C1s binding energy (284.6 eV) of the carbon contaminants on the surface.

The temperature nitrogen adsorption-desorption test (BET) was performed on a JW-BK200C specific surface area and pore size analyzer from Beijing Jingwei Gaobo Co., Ltd. Specific surface area and pore volume were calculated using the two-parameter BET equation, and pore distribution was calculated using the BJH method.

500 mg of samples prepared according to the inventive examples and the comparative examples of the present invention as removal agent were loaded into the reactor isothermal section of a passivated fixed-bed microreactor with an inner diameter of 12 mm and a length of 500 mm. The reactor was filled with quartz sand on both the top and bottom of the reactor isothermal section. The sulfide - containing feed contained 5000 ppm of sulfide (carrier gas was hydrogen, and the sulfides was a combination of hydrogen sulfide and carbonyl sulfide in a molar ratio of 1:1). The sulfide removal reaction was carried out at 50°C and 2 MPa at a flow rate of 100 ml/min. The sulfide content in the feed after the removal reaction was analyzed online, and then the sulfide removal rate was calculated. The sulfide removal rate after 1 h is shown in Table 3.1, and other characterization results of the prepared samples are shown in Table 3.2. The XRD pattern of the manganese oxide prepared in Example 3.1 of the present invention is shown in Figure 3.

**Table 3.1**

| | sulfur-containing compound removal rate /% |
|---|---|
| Example 3.1 | 99.1 |
| Example 3.2 | 95.7 |
| Example 3.3 | 92.5 |
| Example 3.4 | 90.8 |
| Example 3.5 | 94.2 |
| Example 3.6 | 90.1 |
| Example 3.7 | 89.5 |
| Example 3.8 | 91.3 |
| Example 3.9 | 92.0 |
| Example 3.10 | 83.8 |
| Example 3.11 | 77.7 |
| Example 3.12 | 70.2 |
| Example 3.13 | 75.1 |

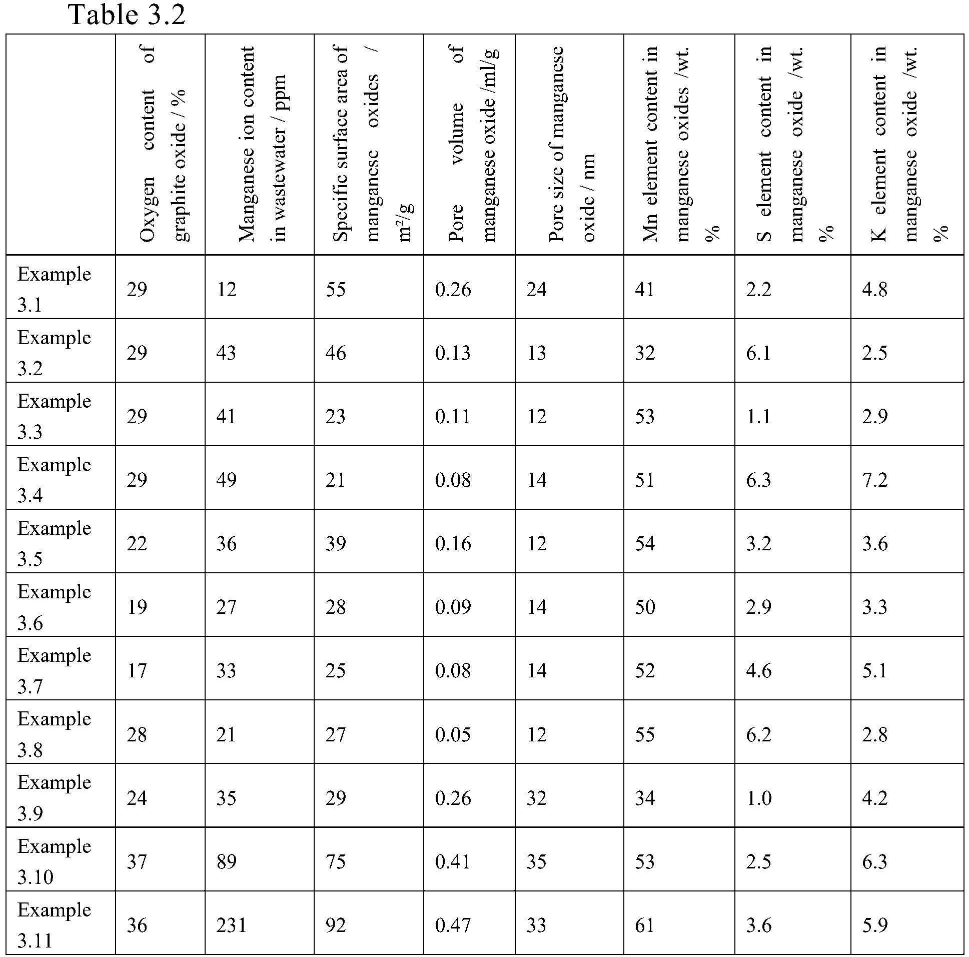

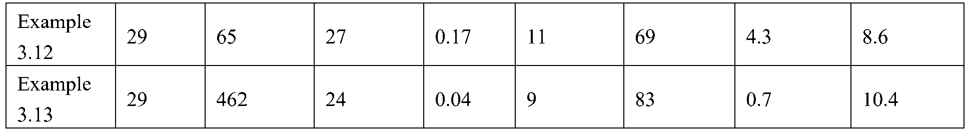

As can be seen from the testing results in Tables 3.1 and 3.2, the manganese oxides prepared by the methods provided by the preferred embodiments of this invention have a large specific surface area and a large pore volume, and a moderate pore size. They exhibit excellent sulfur-containing compounds removal performance in the reaction process of removing sulfides from gases, achieving a sulfur-containing compound removal rate from the feed of equal to or over 90%. At the same time, no sodium nitrate and hydrogen peroxide needs to be added during the reaction, reducing the cost for preparation of the materials. The manganese oxide co-produced can significantly reduce the content of manganese ion and other substances in wastewater.

As can be seen from the testing results of Examples 3.1 to 3.10, when the preparation method, type and amount of auxiliary agents, and reaction conditions were within the preferred ranges of this invention, the effects and performances of the products prepared by this invention can be improved. A comparison of Example 3.1 with Examples 3.2 to 3.10 shows that when the type and amount of the auxiliary agents, hydrothermal reaction conditions, type and amount of concentrated acid, amount and addition batches of potassium permanganate, heating temperature, stirring time, and the mass ratio of water to graphite are all within the preferred ranges of this invention, the performances of the manganese oxide prepared by this invention in removing sulfides can be further improved, and the manganese ion content in the wastewater produced during preparation can be significantly reduced.

As can be seen from the testing results of Examples 3.11 to 3.13, in Example 3.11, wherein potassium permanganate was added to graphite all at once, the reaction temperature rapidly increased to above 80°C, some materials splashed, causing uneven adsorption of potassium permanganate on graphite. This resulted in excessively large pore volumes and pore sizes in the prepared manganese oxides, leading to poor adsorption of sulfides in the gas, low removal rates, and excessively high manganese ion content in the wastewater. In Example 3.12, the hydrothermal treatment temperature was too high and the treatment time was too long. The high temperature caused the oxygen-containing groups to decompose thermally, affecting the product structure. This resulted in smaller specific surface areas, pore volumes, and pore sizes in the prepared manganese oxides, making them unable to effectively remove sulfides from the gas, resulting in low removal rates, and higher manganese ion content in the wastewater compared to Examples 3.1-10. In Example 3.13, the amount of potassium persulfate was too high, resulting in excessive oxidation, which was not conducive to the formation of manganese oxide. This resulted in smaller specific surface area, pore volume, and pore size in the prepared manganese oxide, and poor product performance, resulting in ineffective removal of sulfides from the gas, a low removal rate, and excessively high manganese ion content in the wastewater.

### Experiment Series 4

### Example 4.1

a. 150ml of concentrated sulfuric acid (mass concentration greater than 98%) and 5g of graphite were simultaneously added to a beaker and mixed to obtain a mixture;
b. 25g of potassium permanganate was added in 5 equal batches to the mixture obtained in step a, and mixed through stirring at 10 °C for 1 hour to obtain a mixture material;
c. The mixture material obtained in step b was stirred and reacted at 35°C under autogenous pressure for 2 h;
d. 150 ml of water was added to the mixture material obtained in step c, continued to reaction while stirring at 90°C for 1 h, and then filtered to obtain solid graphite oxide and a stock solution as separated;
e. The stock solution as separated from step d was mixed with 5g of potassium persulfate and hydrothermally treated for 24h at 120°C and under autogenous pressure, and solid phase manganese oxide was taken out by solid-liquid separation.

As measured, the solid-phase manganese oxide contained 49.8 wt. % Mn, 2.1 wt. % S, 5.2 wt. % K, and 0.25 wt. % C elements, with the remainder being O element. Further infrared spectroscopy analysis revealed absorption peaks at about 1725 cm⁻¹, 1630 cm⁻¹, and 1110 cm⁻¹. The peak at 1725 cm⁻¹ was identified as the stretching vibration peak of C=O, the peak at 1630 cm⁻¹ as the bending vibration absorption peak of C-OH, and the peak at 1110 cm⁻¹ as the vibrational absorption peak of C-O-C, indicating that the carbon in the sample existed in the form of graphite oxide.

### Comparative Example 4.1

a. 150ml of concentrated sulfuric acid (mass concentration greater than 98%) was added to a beaker;
b. 25g of potassium permanganate was added in 5 equal batches to the concentrated sulfuric acid in step a, and mixed through stirring at 10 °C for 1 hour to obtain a mixture material;
c. The mixture material obtained in step b was stirred and reacted at 35°C under autogenous pressure for 2 h;
d. 150 ml of water was added to the mixture material in step c, continued to reaction while stirring at 90°C for 1 h, to obtain a mixed stock solution;
e. The mixed stock solution from step d was mixed with 5g of potassium persulfate and hydrothermally treated for 24h at 120°C and under autogenous pressure, and solid phase manganese oxide was taken out by solid-liquid separation.

As measured, the solid-phase manganese oxide contained 58.6 wt.% Mn, 3.0 wt.% S, 0.6 wt.% K, and 0 wt.% C elements, with the remainder being O element. Further infrared spectroscopy analysis showed no absorption peaks at about 1725 cm⁻¹, 1630 cm⁻¹, and 1110 cm⁻¹, indicating that the sample did not contain carbon and graphite oxide.

### Comparative Example 4.2

Hydrogen purification performance was investigated using commercially available manganese dioxide (Sinopharm Chemical Reagent Co., Ltd., analytical grade) as the adsorbent.

### Comparative Example 4.3

The preparation method of Example 4.1 was employed, except that 0.25wt.% of graphite oxide was added to the solid manganese oxide after step e and mixed uniformly.

### Comparative Example 4.4

0.25 wt.% of graphite oxide was added to commercially available manganese dioxide (Sinopharm Chemical Reagent Co., Ltd., analytical grade) and mixed uniformly.

### Testing Examples

500 mg of samples prepared in the inventive Example 4.1 and Comparative Examples 4.1 to 4.4 as removal agents were loaded into the reactor isothermal section of a passivated fixed-bed microreactor with an inner diameter of 12 mm and a length of 500 mm. The reactor was filled with quartz sand on both the top and bottom of the reactor isothermal section. The sulfide content in the sulfide-containing feed was 5000 ppm (carrier gas was hydrogen, and the sulfide was a combination of hydrogen sulfide and carbonyl sulfide in a molar ratio of 1:1). The sulfide removal reaction was carried out at 30°C and 2 MPa at a flow rate of 100 ml/min. The sulfide content in the feed after the removal reaction was analyzed online, and then the sulfide removal rate was calculated. The sulfide removal rate after 1 h is shown in Table 4.1.

**Table 4.1**

| | sulfur-containing compound removal rate /% |
|---|---|
| Example 4.1 | 99.6 |
| Comparative Example 4.1 | 36.3 |
| Comparative Example 4.2 | 30.8 |
| Comparative Example 4.3 | 35.9 |
| Comparative Example 4.4 | 30.2 |

The preferred embodiments of the present invention have been described in detail above with reference to the accompanying drawings. However, the present invention is not limited to the specific details of the above embodiments. Within the scope of the technical concept of the present invention, various simple modifications can be made to the technical solution of the present invention, and these simple modifications all fall within the protection scope of the present invention.

It should also be noted that the various specific technical features described in the above specific embodiments can be combined in any suitable manner, as long as they are not contradictory. In order to avoid unnecessary repetition, the present invention will not describe the various possible combinations separately.

Furthermore, various different embodiments of the present invention can be combined in any way, as long as they do not violate the spirit of the present invention, they should also be regarded as the content disclosed by the present invention.

## Claims

1. A manganese-based adsorbent material comprising Mn, C, O, optionally S, and optionally K elements;
wherein the manganese-based adsorbent material contains 25-63 wt. % of Mn, 0-15 wt. % of S, 14-37 wt. % of O, 0-20 wt. % of K, and 0.01-5 wt. % of C elements, based on the mass of the manganese-based adsorbent material,
wherein the manganese-based adsorbent contains Mn in the form of manganese oxides and C in the form of graphite oxide.

2. The manganese-based adsorbent material according to claim 1, wherein
the manganese-based adsorbent material contains 30-55 wt. % of Mn, 0.8-10 wt. % of S, 1-10 wt. % of K, and 0.01-5 wt. % of C elements, based on the mass of the manganese-based adsorbent material;
alternatively, the manganese-based adsorbent material contains 25-53wt. % of Mn, 1-15 wt. % of S, 2-20 wt. % of K, and 0.01-2 wt. % of C elements, based on the mass of the manganese-based adsorbent material;
alternatively, the manganese-based adsorbent material contains 55 - 63 wt. % of Mn, and 0.01 - 1 wt. % of C elements, based on the mass of the manganese-based adsorbent material.

3. The manganese-based adsorbent material according to claim 1 or 2, wherein,
the XRD pattern of the manganese-based adsorbent material shows characteristic peaks at 20 positions of 28.6 ± 0.5°, 37.4 ± 0.3°, 41.0 + 0.3°, 42.8 ± 0.3°, 56.6 ± 0.3°, 59.4 ± 0.3°, 64.9 ± 0.3°, and 72.4 ± 0.3°, respectively; and the half-width of the diffraction peak at 28.6 ± 0.5° is greater than 0.1°;
alternatively, the XRD pattern of the manganese-based adsorbent material shows characteristic peaks at 2θ positions of 12.2 ± 0.5°, 24.7 ± 0.5°, 36.8 ± 0.5° and 66.3 ± 0.5°, respectively; the half-width of the diffraction peak at 12.2 ± 0.5° is greater than 0.5°;
alternatively, the XRD pattern of the manganese-based adsorbent material shows characteristic peaks at 2θ positions of 12.1 ± 0.5°, 24.6 ± 0.4°, 36.9 ± 0.4°, and 66.2 ± 0.4°, respectively; and the half-width of the diffraction peak at 12.1 ± 0.5° is greater than 0.4°.

4. The manganese-based adsorbent material according to any one of claims 1-3, wherein,
the manganese-based adsorbent material has a specific surface area of 10 - 100 m²/g, preferably 30 - 60 m²/g, a pore volume of 0.05 - 0.5 ml/g, preferably 0.1 - 0.3 ml/g, and a pore size of 12 - 36 nm, preferably 15 - 30 nm,
alternatively, the manganese-based adsorbent material has a specific surface area of 200-350 m²/g, and a pore volume of 0.2-0.9 ml/g; preferably, a specific surface area of 240-320 m²/g, and a pore volume of 0.4-0.7 ml/g,
alternatively, the manganese-based adsorbent material has a specific surface area of 10 - 30 m²/g, preferably 15 - 25 m²/g, and a pore volume of 0.01 - 0.1 ml/g, preferably 0.02 - 0.08 ml/g.

5. A method for co-producing graphite oxide and a manganese-based adsorbent material, wherein the method comprises:
S1. graphite, a Brønsted acid, and a permanganate, preferably potassium permanganate, are mixed to obtain a mixture, and then the resulting mixture is heated to carry out a reaction;
S2. water and/or hydrogen peroxide is added to the reaction material obtained in step S1 to continue the reaction, and the obtained reaction material is separated into a stock solution as separated and a solid phase through solid-liquid separation, and the solid phase is recovered to obtain the graphite oxide;
S3. the stock solution as separated in step S2 is subjected to a hydrothermal reaction with or without addition of an auxiliary agent, and the resulting solid product is separated out to obtain the manganese-based adsorbent material;
wherein the conditions for the hydrothermal reaction in step S3 include: a temperature of 100 - 200°C, preferably 120 - 200°C, more preferably 150 - 180°C, and a period of 1 - 72h, preferably 12 - 36h.

6. The method according to claim 5, wherein the step S1 has one or more of the following features:
the mass ratio of the permanganate to graphite is (1 - 15): 1;
the graphite is one or more of natural flake graphite, natural cryptocrystalline graphite, and artificial graphite;
the graphite has a carbon content of 95 wt. % or more, preferably 99 wt. % or more, an ash content of less than 5 wt. %, preferably less than 2 wt. %, and a mesh size of 20 to 2000 mesh, preferably 50 to 200 mesh;
the Brønsted acid is selected from one or more of sulfuric acid, nitric acid and perchloric acid;
the concentration A₀ of the Brønsted acid is any concentration between M-10% and M+10%, preferably any concentration between M-5% and M+5%, wherein M is the highest concentration of the Brønsted acid; and
the mass ratio of the Brønsted acid to the graphite is (10 - 200): 1, preferably (25 - 100): 1.

7. The method according to claim 5 or 6, wherein the step S2 has one or more of the following features:
when hydrogen peroxide is added, the mass ratio of the added hydrogen peroxide to the graphite is (50 - 200): 1, preferably (50 - 200): 1, and the mass concentration of the hydrogen peroxide is 0.01 - 5%, preferably 0.05 - 1%;
alternatively, when no hydrogen peroxide is added, the mass ratio of the added water to the graphite is (50 - 2000): 1, preferably (80 - 250): 1.

8. The method according to any one of claims 5 to 7, wherein the carbon to oxygen molar ratio of the graphite oxide is 2 to 4, preferably 2.5 to 3.5;
alternatively, the oxygen content of the graphite oxide is 35-60 wt. %, and the carbon content of the graphite oxide is 40-65 wt. %;
alternatively, the oxygen content of the graphite oxide is 15-40 wt. %, and the carbon content of the graphite oxide is 60-85 wt. %.

9. The method according to any one of claims 5 to 8, wherein the step S3 is carried out under the condition of adding an auxiliary agent, the auxiliary agent being a persulfate or hypochlorite, preferably one or more of ammonium persulfate, sodium persulfate, potassium persulfate and sodium hypochlorite, and the mass ratio of the auxiliary agent to the graphite is (0.2 - 10): 1.

10. The method according to any one of claims 5 to 9, wherein the method has one or more of the following features:
in step S1, potassium permanganate is added in batches to graphite and the Brønsted acid; the mass ratio of potassium permanganate in each batch to graphite is (0.1 - 2): 1, preferably (0.2 - 1): 1; during the mixing process, the temperature is controlled to equal to or below 40 °C, preferably equal to or below 30 °C, more preferably equal to or below 20 °C, and the mixing time is 0.1 - 10 h, preferably 0.5 - 5 h; the temperature of the heating for reaction is 30 - 60 °C, preferably 40 - 50 °C, and the time thereof is 0.2 - 6 h, preferably 0.5 - 4 h;
in step S2, when hydrogen peroxide is not added, the reaction time is 0.1 - 5h, preferably 0.5 - 2h, and preferably the reaction temperature is 70 - 120 °C, more preferably 85 - 105 °C;
in step S2, when hydrogen peroxide is added, the reaction time is 0.1 - 6h, preferably 0.5 - 3h, and the reaction temperature is 60 - 99 °C , preferably 85 - 95°C;
in step S3, the conditions for the hydrothermal treatment include: a temperature of 120 - 200°C, preferably 150 - 180°C, and a period of 1 - 72h, preferably 12 - 36h.

11. The method according to any one of claims 5 to 10, wherein step S3 comprises:
(1) the stock solution as separated is optionally mixed with water to obtain a mixture, wherein the mass ratio of the stock solution as separated to water is 1:(0 - 10);
(2) the mixture is subjected to hydrothermal treatment, the solid product is taken out, and then washed, dried and optionally calcined to obtain the manganese-based adsorbent material;
wherein, the conditions for the hydrothermal treatment include: a temperature of 100 - 200°C under autogenous pressure, and a period of 2 - 72h;
the conditions for calcination include: a temperature of 250 - 700°C, a period of 1 - 12h, and a pressure of 0.1 - 1MPa.

12. A manganese-based adsorbent material prepared using the method according to any one of claims 5 to 11.

13. The manganese-based adsorbent material according to claim 12, wherein
the manganese-based adsorbent material contains 30-55 wt. % of Mn, 0.8-10 wt. % of S, 1-10 wt. % of K, and 0.01-5 wt. % of C elements, based on the mass of the manganese-based adsorbent material;
alternatively, the manganese-based adsorbent material contains 25-53wt. % of Mn, 1-15 wt. % of S, 2-20 wt. % of K, and 0.01-2 wt. % of C elements, based on the mass of the manganese-based adsorbent material;
alternatively, the manganese-based adsorbent material contains 55 - 63 wt. % of Mn, and 0.01 - 1 wt. % of C, based on the mass of the manganese-based adsorbent material.

14. The manganese-based adsorbent material according to claim 12, wherein
the XRD pattern of the manganese-based adsorbent material shows characteristic peaks at 2θ positions of 28.6 ± 0.5°, 37.4 ± 0.3°, 41.0 ± 0.3°, 42.8 ± 0.3°, 56.6 ± 0.3°, 59.4 ± 0.3°, 64.9 ± 0.3°, and 72.4 ± 0.3°, respectively; and the half-width of the diffraction peak at 28.6 ± 0.5° is greater than 0.1°;
alternatively, the XRD pattern of the manganese-based adsorbent material shows characteristic peaks at 2θ positions of 12.2 ± 0.5°, 24.7 ± 0.5°, 36.8 ± 0.5° and 66.3 ± 0.5°, respectively; the half-width of the diffraction peak at 12.2 ± 0.5° is greater than 0.5°;
alternatively, the XRD pattern of the manganese-based adsorbent material shows characteristic peaks at 2θ positions of 12.1 ± 0.5°, 24.6 ± 0.4°, 36.9 ± 0.4°, and 66.2 ± 0.4°, respectively; and the half-width of the diffraction peak at 12.1 ± 0.5° is greater than 0.4°.

15. The manganese-based adsorbent material according to claim 12, wherein
the manganese-based adsorbent material has a specific surface area of 10 - 100 m²/g, preferably 30 - 60 m²/g, a pore volume of 0.05 - 0.5 ml/g, preferably 0.1 - 0.3 ml/g, and a pore size of 12 - 36 nm, preferably 15 - 30 nm,
alternatively, the manganese-based adsorbent has a specific surface area of 200-350 m²/g, and a pore volume of 0.2-0.9 ml/g; preferably, a specific surface area of 240-320 m²/g, and a pore volume of 0.4-0.7 ml/g,
alternatively, the manganese-based adsorbent material has a specific surface area of 10 - 30 m²/g, preferably 15 - 25 m²/g, and a pore volume of 0.01 - 0.1 ml/g, preferably 0.02 - 0.08 ml/g.

16. Use of the manganese-based adsorbent material according to any one of claims 1 to 4 and 12 to 15 for the removal of sulfides, especially hydrogen sulfide and carbonyl sulfide, from gases, and/or for the removal of formaldehyde from gases.

17. A method for purifying hydrogen, the method comprising: hydrogen is contacted with the manganese-based adsorbent material according to any one of claims 1 to 4 and 12 to 15 to carry out a purification reaction;
the reaction conditions for the method for purifying hydrogen include: a temperature of 20 - 50 °C, a pressure of 0.1 - 5.0 MPa, and a space velocity of 50 - 10000 h⁻¹;
the hydrogen has a volume content of sulfides of 0.1% to 1%, the content of sulfides in the hydrogen being calculated as hydrogen sulfide.
